# FASCICULE DE BREVET EUROPEEN

(11) **EP 0 337 882 B1**
(45) Date de publication et mention de la délivrance du brevet: **05.01.1994**
(21) Numéro de dépôt: 89401007.3
(22) Date de dépôt: 12.04.1989
(51) Int. Cl.: A23N 15/00, B26D 3/26

(54) **Procédé et dispositif pour la réalisation de légumes ou fruits tournés et légumes ou fruits tournés obtenus par ce procédé**
Verfahren und Vorrichtung zur Herstellung von geformten Gemüsen oder Früchten sowie geformte Gemüse oder Früchte, hergestellt nach dem Verfahren
Method and apparatus for the production of formed vegetables or fruits and formed vegetables or fruits produced by this method

(30) Priorité: 12.04.1988 FR 8804831
(43) Date de publication de la demande: 18.10.1989
(73) Titulaire: Fischer, Gérard, F-89260 Saint Martin sur Oreuse (FR)
(72) Inventeur: Fischer, Gérard, F-89260 Saint Martin sur Oreuse (FR)
(74) Mandataire: Puiroux, Guy

(56) Documents cités:
- DE-A- 2 256 899
- DE-C- 79 401
- US-A- 3 190 330
- US-A- 4 430 931

## Description

L'invention concerne un procédé et un dispositif pour la réalisation de légumes ou fruits tournés, ainsi que les légumes ou fruits tournés obtenus par ce procédé.

Le document US-A-4 430 931 décrit une machine à peler les légumes comportant plusieurs paires de couteaux dont les axes de déplacement sont répartis autour d'un axe central coïncidant avec l'axe du légume à peler. Les couteaux d'une même paire sont sollicités l'un vers l'autre par un ressort et ils sont chacun solidaires d'une plaque de guidage permettant d'écarter lesdits couteaux l'un de l'autre lors de l'introduction du légume. Il est clair qu'une telle machine est incapable de réaliser des légumes ou fruits tournés, car elle est conçue pour peler et non pour tailler lesdits légumes ou fruits.

Les fruits ou légumes tournés sont très utilisés dans les industries alimentaires du fait de leur présentation esthétique, régulière et harmonieuse. C'est ainsi qu'ils sont utilisés en conserverie, pour la fabrication de plats surgelés, pour la restauration, en particulier la restauration de luxe telle que servie dans les avions ou à bord des paquebots.

Ces fruits ou légumes tournés ont une forme ovoïde munie de facettes courbes et, de ce fait, sont réalisés jusqu'à présent presque exclusivement à la main. En effet, la forme des facettes incurvées ne pouvait pas jusqu'à présent être produite par un emporte-pièce, de sorte qu'une mécanisation de la production nécessitait des procédés du type usinage au moyen d'outils guidés selon un profil courbe par rapport au fruit ou légume. De tels procédés sont d'une mise en oeuvre extrêmement compliquée et le traitement est relativement long du fait que les différentes facettes doivent être traitées successivement. C'est la raison pour laquelle aucune machine satisfaisante de réalisation de légumes ou fruits tournés n'est disponible jusqu'à présent sur le marché.

La présente invention vise à obtenir un procédé et un dispositif de réalisation de fruits ou légumes tournés qui soient d'une mise en oeuvre simple et économique, qui soient utilisables avec les mêmes avantages à l'échelle industrielle comme à l'échelle familiale.

A cet effet, l'invention a pour objet un procédé de réalisation de légumes ou fruits tournés de forme ovoïde avec des facettes courbes, caractérisé par le fait qu'on réalise, à partir du fruit ou du légume, une ébauche cylindrique ou prismatique et on entaille ladite ébauche au moyen d'au moins deux couteaux à arête de coupe non rectiligne mobiles en translation chacun selon un axe orthogonal à une génératrice de ladite ébauche, les axes de translation des couteaux étant décalés angulairement autour d'un axe central dudit cylindre parallèle à la génératrice. De préférence, le cylindre formant l'ébauche est un cylindre droit.

Selon une forme de mise en oeuvre particulièrement simple, le cylindre formant ladite ébauche est une révolution. En variante, le cylindre formant ladite ébauche a une base régulière, par exemple polygonale. Ces deux formes de mise en oeuvre du procédé selon l'invention permettent de fabriquer un fruit ou légume tourné de forme régulière.

Dans tous les cas, la réalisation de l'ébauche cyclindrique droite peut être faite au moyen d'un emporte-pièce de forme correspondant à celle de la base du cylindre en éliminant simultanément la peau du fruit ou légume. L'entaillage du cylindre par des couteaux non linéaires mobiles en translation orthogonalement à une génératrice du cylindre est également analogue au travail d'un emporte-pièce. Ces deux opérations peuvent être effectuées avec des moyens simples et économiques qui sont, pour une production industrielle, facilement automatisables.

Afin d'obtenir une forme régulière des fruits tournés, une forme de mise en oeuvre du procédé selon l'invention prévoit que les axes de translation des couteaux sont décalés angulairement de manière régulière autour dudit axe central.

Une forme simple du procédé selon l'invention est caractérisée par le fait que l'arête de coupe des couteaux est fermée, par exemple circulaire, et on met les couteaux en translation les uns après les autres.

Selon une variante qui permet une translation simultanée des couteaux, l'arête de coupe des couteaux est ouverte, par exemple en arc de cercle.

L'invention a en outre pour objet un dispositif pour la mise en oeuvre du procédé selon l'invention, caractérisé par le fait qu'il comprend des moyens de taillage, dans un fruit ou un légume, d'une ébauche cylindrique ou prismatique, des moyens de maintien de ladite ébauche, et au moins deux couteaux à arête de coupe non rectiligne mobiles en translation chacun selon un axe orthogonal à une génératrice de l'ébauche, les axes de translation desdits couteaux étant décalés angulairement autour d'un axe central de l'ébauche parallèle à une génératrice de l'ébauche.

Selon une forme de réalisation de l'invention, les moyens de taillage de l'ébauche sont formés par un cylindre creux muni d'une arête de coupe et d'au moins une lame transversale pour la coupe des extrémités du cylindre.

Le cylindre creux peut être fixe et un poussoir mobile en translation parallèlement à la génératrice du cylindre coopère avec le fruit ou légume pour le pousser contre ladite arête de coupe.

En variante, le cylindre creux est coulissant et le fruit ou légume est maintenu fixe pendant le coulissement du cylindre creux.

De préférence, les moyens de maintien de l'ébauche sont constitués par ledit cylindre creux et lesdites lames transversales, et ledit cylindre creux comporte une pluralité d'ouvertures latérales pour la passage desdits couteaux.

Selon une forme de réalisation avantageuse, les couteaux sont commandés par excentrique.

De préférence, les couteaux étant à arête ouverte, les trajectoires des couteaux se rejoignent en fin de course des couteaux, ce qui permet un actionnement simultané des couteaux.

L'invention sera bien comprise à la lecture de la description suivante faite en se référant au dessin annexé dans lequel :
- la figure 1 est une vue schématique en perspective d'un outil de taillage selon un exemple de réalisation de l'invention,
- la figure 2 est analogue à la figure 1, pour un second exemple de réalisation de l'invention,
- la figure 3 est une vue schématique en perspective d'un fruit ou légume tourné selon l'invention obtenu avec l'outil de coupe selon la figure 2, et
- la figure 4 est une vue schématique d'extrémité, partiellement en coupe, d'une partie d'un dispositif selon un exemple de réalisation de l'invention utilisant un outil selon la figure 2.

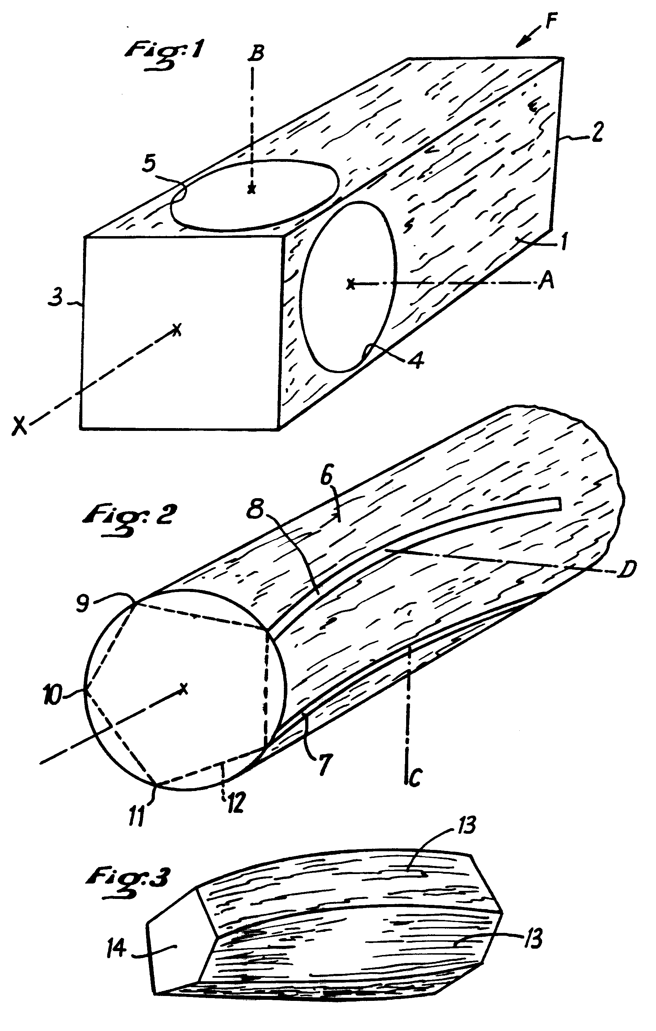

Dans la forme de réalisation de la figure 1,l'outil de taillage du fruit ou légume est constitué par un parallèlépipède creux 1 à section carrée dont une extrémité est munie d'une arête coupante 2. Le fruit ou légume est poussé contre l'arête 2 par un poussoir. Un couteau transversal d'extrémité se déplaçant dans le plan de l'extrémité 3 de l'outil 1 opposée à l'arête 2 découpe dans le cylindre découpé par l'arête 2 dans le fruit ou légume une face avant plane et,après soulèvement du couteau et coulissement du fruit ou légume dans le sens de la flèche F d'une distance sensiblement égale à l'arête du carré de base de l'outil 1, le même couteau sépare dans le cylindre une face arrière qui constitue en même temps la face avant du tronçon cylindrique suivant. On découpe ainsi le fruit ou légume en cubes. Les dispositifs de ce type sont bien connus et ne seront en conséquence pas décrits ni représentés plus en détail.

L'outil 1 pourrait être coulissant et le fruit ou légume maintenu fixe, avec un système de couteaux pour découper les faces d'extrémité.

Selon une forme particulièrement simple de réalisation de l'invention, l'outil 1 comporte des ouvertures périphériques 4 et 5, circulaires dans l'exemple représenté, formées dans deux faces adjacentes de l'outil 1, et dont les axes A et B sont perpendiculaires à l'axe X et perpendiculaires entre eux.

Selon l'invention, on fait coulisser dans l'ouverture 4 un emporte-pièce de section légèrement inférieure, coaxialement à l'axe A puis, après retrait de ce premier emporte-pièce, on fait coulisser dans l'ouverture 5, coaxialement à l'axe B, un second emporté-pièce identique au premier. On a donc découpé dans le fruit ou légume une pièce tournée particulièrement simple constituée par l'intersection de deux cylindres de révolution. Les emporte-pièces sont, dans cet exemple des couteaux à arête de coupe fermée de forme circulaire.

Bien entendu, les formes et les dimensions de l'outil 2 peuvent être différentes. On peut par exemple utiliser un outil à section circulaire, polygonale à arêtes droites ou courbes. Le nombre et la forme des ouvertures 4,5 peuvent varier, par exemple en prévoyant une ouverture par face dans le cas d'un outil à section polygonale, avec des couteaux de forme et en nombre correspondants.

Le déplacement des couteau est toujours orthogonal à l'axe X. Comme dans l'exemple décrit, il est avantageux que l'outil 1 soit de révolution ou à base régulière et que les axes des outils soient répartis angulairement régulièrement autour de l'axe X.

Dans la forme de réalisation de la figure 2, l'outil de taillage 6 est cylindrique de révolution et comporte cinq ouvertures latérales 7,8,9,10,11 qui sont incurvées par rapport aux génératrices du cylindre creux 6. Par char ouverture 7 - 11 peut coulisser un couteau à arête de coupe curviligne, selon un axe de coulissement orthogonal à l'axe Y de l'outil 6. Les ouvertures 7 - 11 sont régulièrement réparties autour de l'axe Y et leur intersection avec un plan orthogonal à l'axe Y détermine un hexagone régulier 12. Il est donc possible, de ce fait, de faire coulisser les cinq couteaux simultanément parallèlement à leurs axes respectifs, tels que C et D,parallèles chacun à un côté de l'hexagone 12.

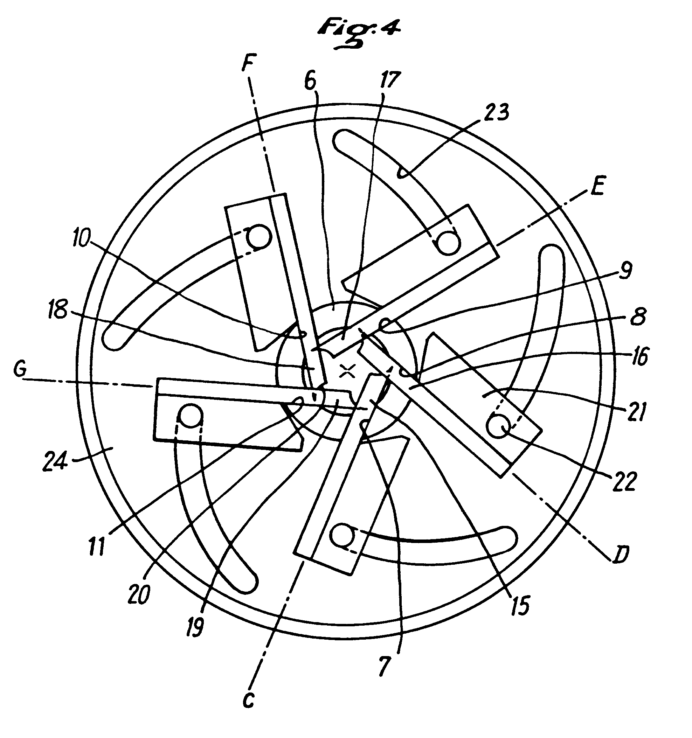

On obtient ainsi un fruit ou légume tourné tel que celui représenté à la figure 3, dont les facettes 13 sont des secteurs cylindriques identiques et régulièrement répartis autour de l'axe X, avec des faces d'extrémité 14 qui sont pentagonales régulières.

Dans ce cas également, la forme de l'outil 6,le nombre et la forme des ouvertures ou fentes 7 - 11 peuvent être quelconques, la caractéristique de cette forme de réalisation de l'invention résidant en ce que les outils de coupe sont ouverts.

On a représenté schématiquement à la figure 4 une partie d'un dispositif selon un exemple de réalisation de l'invention utilisant un outil tel que celui représenté à la figure 2.

Cinq couteaux 15, 16, 17, 18, 19 coulissent parallèlement à leur axe respectivement dans les ouvertures 7, 8, 9, 10, 11 de l'outil 6. Les axes C,D,E,F,G des couteaux 15 - 19 sont orthogonaux à l'axe Y de l'outil 6, sont régulièrement décalés angulairement autour de cet axe, et se coupent au voisinage de la périphérie intérieure de l'outil 6. Les couteaux 15 - 18 ont une arête de coupe ouverte en arc de cercle 20.

Les couteaux 15 - 19 sont guidés en translation et sont solidaires chacun d'un support 21 portant un bout d'axe 22. Chaque bout d'axe 22 est logé dans une rainure en arc de cercle 23 d'un disque 24 pivotant coaxialement à l'outil 6. Le centre de chaque arc de cercle 23 est distinct du centre du disque 24, les rainures 23 et leurs centres étant régulièrement répartis autour du centre du disque 24. Une rotation du disque 24 dans un sens produit une avance simultanée des couteaux 15 - 19 et une rotation en sens inverse produit leur retrait simultané.

Cette commande simultanée des couteaux peut être remplacée par tout autre système de commande simultanée, en particulier tout autre système à excentrique.

La forme des couteaux peut être différente, par exemple polygonale, elliptique, ou complexe.

## Revendications

1. Procédé de réalisation de légumes ou fruits tournés de forme ovoïde avec des facettes courbes, caractérisé par le fait qu'on réalise à partir du fruit ou du légume une ébauche cylindrique ou prismatique et on entaille ladite ébauche au moyen d'au moins deux couteaux (15-19) à arête de coupe (20) non rectiligne mobiles en translation chacun selon un axe (A,B,C,D,E,F,G) orthogonal à une génératrice de ladite ébauche, les axes de translation (A,B,C,D,E,F,G) des couteaux (15 - 19) étant décalés angulairement autour d'un axe central (X ; Y) dudit cylindre parallèle à la génératrice.

2. Procédé selon la revendication 1, caractérisé par le fait que le cylindre formant l'ébauche est un cylindre droit.

3. Procédé selon la revendication 2, caractérisé par le fait que le cylindre formant ladite ébauche est de révolution.

4. Procédé selon la revendication 1, caractérisé par le fait que ladite ébauche a une base régulière, par exemple polygonale.

5. Procédé selon l'une des revendications 1 à 4, caractérisé par le fait que les axes de translation (A,B,C,D,E,F,G) des couteaux (15 - 19) sont décalés angulairement de manière régulière autour dudit axe central (X ; Y).

6. Procédé selon l'une des revendications 1 à 5, caractérisé par le fait que l'arête de coupe des couteaux est fermée, par exemple circulaire, et on met les couteaux en translation les uns après les autres.

7. Procédé selon l'une des revendications 1 à 5, caractérisé par le fait que l'arête de coupe (20) des couteaux (15 - 19) est ouverte, par exemple en arc de cercle.

8. Procédé selon la revendication 7, caractérisé par le fait que les trajectoires des couteaux (15 - 19) se rejoignent en fin de course des couteaux (15 - 19).

9. Dispositif pour la mise en oeuvre du procédé selon l'une des revendications 1 à 8, caractérisé par le fait qu'il comprend des moyens de taillage (1,2;6), dans un fruit ou un légume, d'une ébauche cylindrique ou prismatique, des moyens de maintien de ladite ébauche, et au moins deux couteaux (15 - 19) à arête de coupe (20) non rectiligne mobiles en translation chacun selon un axe (A,B; C - G) orthogonal à une génératrice de l'ébauche, les axes de translation (A,B; C - G) desdits couteaux (15 -19) étant décalés angulairement autour d'un axe central (X;Y) de l'ébauche parallèle à une génératrice de l'ébauche.

10. Dispositif selon la revendication 9, caractérisé par le fait que les moyens de taillage de l'ébauche sont formés par un cylindre creux (1,6) muni d'une arête de coupe (2) et d'au moins une lame transversale pour la coupe des extrémités du cylindre.

11. Dispositif selon la revendication 10, caractérisé parle fait que le cylindre creux (1,6) est fixe et un poussoir mobile en translation parallèlement à la génératrice du cylindre coopère avec le fruit ou légume pour le pousser contre ladite arête de coupe (2).

12. Dispositif selon la revendication 10, caractérisé par le fait que le cylindre creux (1,6) est coulissant et le fruit ou légume est maintenu fixe pendant le coulissement du cylindre creux (1,6).

13. Dispositif selon l'une des revendications 10 à 12, caractérisé par le fait que les moyens de maintien de l'ébauche sont constitués par ledit cylindre creux (1,6) et lesdites lames transversales, et ledit cylindre creux (1,6) comporte une pluralité d'ouvertures latérales (4,5; 7 - 11) pour le passage desdits couteaux (15 - 19).

14. Dispositif selon l'une des revendications 9 à 13, caractérisé par le fait que les trajectoires des couteaux (15 - 19) se rejoignent en fin de course des couteaux (15 - 19).

## Claims

1. A process for producing vegetables or fruit into an ovoid shape with curved facets, characterized by the fact that a cylindrical or prismatic rough form is obtained with the fruit or vegetable and that the said rough form is cut by means of at least two knives (15 - 19) with non-rectilinear cutting edges (20) each one travelling along an axis (A, B, C, D, E, F, G) orthogonally to a generating line of the said rough form, the translation axes (A, B, C, D, E, F, G) of the knives (15 - 19) being offset at an angle in relation to a central axis (X ; Y) of the said cylinder parallel to the generating line.

2. A process according to claim 1, characterized by the fact that the cylinder forming the rough form is a straight cylinder.

3. A process according to claim 2, characterized by the fact that the cylinder forming the rough form is generated by rotation.

4. A process according to claim 1, characterized by the fact that the said rough form has a regular base, polygonal, for example.

5. A process according to one of the claims 1 to 4, characterized by the fact that the translation axes (A, B, C, D, E, F, G) of the knives (15 - 19) are offset at an angle at regular intervals around the said central axis (X ; Y).

6. A process according to one of the claims 1 to 5, characterized by the fact that the cutting edge of the knives is closed, circular, for example, and that the knives are set to travel sequentially.

7. A process according to one of the claims 1 to 5, characterized by the fact that the cutting edge (20) of the knives (15 - 19) is open, in an arc of a circle for example.

8. A process according to claim 7, characterized by the fact that the paths of the knives (15 - 19) meet at the end of the travel limit of the knives (15-19).

9. A device for implementing the process according to one of the claims 1 to 8, characterized by the fact that it includes some means of carving (1, 2, 6) a cylindrical or prismatic rough form from a fruit or vegetable, some means of support of the said rough form and at least two knives (15 - 19) fitted with a non-rectilinear cutting edge (20), each each one travelling along an axis (A, B ; C - G) orthogonally to a generating line of the said rough form, the translation axes (A, B ; C - G) of the knives (15 - 19) being offset at an angle in a relation to a central axis (X ; Y) of the rough form parallel to a generating line of the rough form.

10. A device according to claim 9, characterized by the fact that the means of cutting the rough form are composed of a hollow cylinder (1,6), fitted with one cutting edge (2) and at least one transverse blade for cutting the ends of the cylinder.

11. A device according to claim 10, characterized by the fact that the hollow cylinder (1,6) is fixed and that a mobile pusher, moving in parallel to the generating line of the cylinder operates on the fruit or vegetable to push it against the said cutting edge (2).

12. A device according to claim 10, characterized by the fact that the hollow cylinder (1,6) slides and that the fruit or vegetable is held fixed during the sliding motion of the hollow cylinder (1,6).

13. A device according to one of the claims 10 to 12, characterized by the fact that the means for maintaining the rough form are composed of the said hollow cylinder (1,6) and the said transverse blades and that the said hollow cylinder (1,6) is fitted with many lateral openings (4, 5 ; 7 - 11) allowing the said knives (15 - 19) to pass.

14. A device according to one of the claims 9 to 13, characterized by the fact that the trajectories of the knives (15 - 19) join at the end of the knives (15 - 19) travel limit.

## Patentansprüche

1. Verfahren zum Herstellen von in eiförmige Gestalt mit gekrümmten Facetten gebrachtem Gemüse oder Obst, **dadurch gekennzeichnet**, daß aus Obst oder Gemüse ein zylindrischer oder prismatischer Rohling gebildet und dieser Rohling beschnitten wird mit mindestens zwei Messern (15,19) mit nicht geradliniger Schneidkante (20), die jeweils gemäß einer zu einer Mantellinie des Rohlings senkrechten Achse (A,B,C,D,E,F,G) verschiebbar sind, wobei die Verschiebungsachsen (A,B,C,D,E,F,G) der Messer (15-19) um eine zu der Mantellinie paralle Mittelachse (X; Y) des Zylinders winkelversetzt sind.

2. Verfahren nach Anspruch 1, **dadurch gekennzeichnet**,
daß der den Rohling bildende Zylinder ein gerader Zylinder ist.

3. Verfahren nach Anspruch 2, **dadurch gekennzeichnet**,
daß der den Rohling bildende Zylinder ein Drehzylinder ist.

4. Verfahren nach Anspruch 1, **dadurch gekennzeichnet,**
daß der genannte Rohling eine regelmäßige, beispielsweise polygonale Grundfläche hat.

5. Verfahren nach einem der Ansprüche 1 bis 4, **dadurch gekennzeichnet,** daß die Verschiebungsachsen (A,B,C,D,E,F,G) der Messer (15-19) gleichmäßig um die genannte Mittelachse (X;Y) Winkelversetzt sind.

6. Verfahren nach einem der Ansprüche 1 bis 5, **dadurch gekennzeichnet**, daß die Schneidkante der Messer geschlossen, beispielsweise kreisförmig ist, und daß die Messer eins nach dem anderen verschoben werden.

7. Verfahren nach einem der Ansprüche 1 bis 5, **dadurch gekennzeichnet**, daß die Schneidkante (20) der Messer (15-19) offen, beispielsweise kreisbogenförmig ist.

8. Verfahren nach Anspruch 7, **dadurch gekennzeichnet**,
daß die Trajektorien der Messer (15-19) sich am Ende der Bewegung der Messer (15-19) treffen.

9. Vorrichtung zum Ausführen des Verfahrens nach einem der Ansprüche 1 bis 8, **dadurch gekennzeichnet**, daß sie eine Einrichtung (1,2; 6) zum Schneiden eines zylindrischen oder prismatischen Rohlings aus einem Obst oder Gemüse aufweist, ferner Mittel zum Halten des Rohlings und mindestens zwei Messer (15-19) mit nicht geradliniger Schneidkante (20), die jeweils gemäß einer zu einer Mantellinie des Rohlings senkrechten Achse (A,B; C-G) verschiebbar sind, wobei die Verschiebungsachsen (A,B; C-G) der Messer (15-19) um eine zu einer Mantellinie des Rohlings parallele Mittelachse (X;Y) des Rohlings winkelversetzt sind.

10. Vorrichtung nach Anspruch 9, **dadurch gekennzeichnet**,
daß die Einrichtung zum Beschneiden des Rohlings durch einen Hohlzylinder (1,6) gebildet wird, der mit einer Schneidkante (2) und mindestens einer Transversalklinge zum Abschneiden der Zylinderenden versehen ist.

11. Vorrichtung nach Anspruch 10, **dadurch gekennzeichnet**,
daß der Hohlzylinder (1,6) feststehend ist, und daß eine parallel zu der Mantellinie des Zylinders verschiebbare Drückeinrichtung mit dem Obst oder Gemüse zusammenwirkt, um es gegen die Schneidkante (2) zu drücken.

12. Vorrichtung nach Anspruch 10, **dadurch gekennzeichnet**, daß der Hohlzylinder (1,6) gleitend verschoben wird und das Obst oder Gemüse während der Gleitbewegung des Hohlzylinders (1,6) festgehalten wird.

13. Vorrichtung anch einem der Ansprüche 10 bis 12, **dadurch gekennzeichnet**, daß die Mittel zum Halten des Rohlings durch den genannten Hohlzylinder (1,6) und die genannten Transversalklingen gebildet werden, und daß der Hohlzylinder (1,6) eine Mehrzahl von seitlichen Öffnungen (4,5; 7-11) für den Durchgang der genannten Messer (15-19) gestattet.

14. Vorrichtung nach einem der Ansprüche 9 bis 13, **dadurch gekennzeichnet**, daß die Trajektorien der Messer (15-19) sich am Ende der Bewegung der Messer (15-19) treffen.
